# EUROPÄISCHE PATENTANMELDUNG

(11) **EP 1 213 492 A1**
(43) Veröffentlichungstag der Anmeldung: **12.06.2002**
(21) Anmeldenummer: 01126067.6
(22) Anmeldetag: 02.11.2001
(51) Int. Cl.: F16B 13/06, E21D 21/00

(54) **Verbundanker**

(30) Priorität: 06.12.2000 DE 10060510
(71) Anmelder: fischerwerke Artur Fischer GmbH & Co. KG, 72178 Waldachtal (DE)
(72) Erfinder: Eckstein, Torsten, 79353 Bahlingen (DE)

(57) **Zusammenfassung**

Die Erfindung betrifft einen Verbundanker mit Ankerstange (1), die an ihrem hinteren Ende ein Anschlussgewinde (4) zur Befestigung eines Gegenstandes (13) an einem Bauteil (12) und an ihrem vorderen Ende einen mittels einer Verbundmasse in einem Bohrloch des Bauteils verankerbaren Verankerungsteil (2) aufweist. Um einen Verbundanker zu schaffen, der eine sofortige Montage des zu befestigenden Gegenstandes (13) zulässt wird vorgeschlagen, zwischen dem Anschlussgewinde (4) und dem Verankerungsteil (2) der Ankerstange (1) einen Spreizbereich (5) anzuordnen, der durch eine Spreizhülse (6) und einem mit der Ankerstange (1) in die Spreizhülse (6) zu deren Aufspreizung einziehbaren Spreizkonus (7) gebildet ist.

## Beschreibung

Die Erfindung betrifft einen Verbundanker mit Ankerstange gemäß der Gattung des Anspruches 1.

Ein derartiger in der DE 197 12 425 A1 beschriebener Verbundanker weist eine Ankerstange mit einem Anschlussgewinde zur Befestigung eines Gegenstandes an einem Bauteil sowie an seinem vorderen Ende einen Verankerungsteil auf, der durch mehrere Konusabschnitte gebildet ist. Nach dem Aushärten des Mörtels sind die Konusabschnitte in der Mörtelschale eingebunden und die Ankerstange im Bohrloch des Bauteils verankert. Eine Belastung der Ankerstange ist allerdings erst dann möglich, wenn der Verbundmörtel vollständig ausgehärtet ist. Dies kann in Abhängigkeit von der Art des Mörtels mehrere Stunden unter Umständen gar Tage dauern. Daraus resultiert ein Montageablauf, bei dem zunächst der Verbundanker verankert und zu einem späteren Zeitpunkt der Gegenstand befestigt wird.

Der Erfindung liegt die Aufgabe zugrunde, einen Verbundanker zu schaffen, der eine sofortige Montage des zu befestigenden Gegenstandes zulässt und gleichzeitig die hohen Haltewerte eines Verbundankers ermöglicht.

Die Lösung dieser Aufgabe wird durch die im Anspruch 1 angegebenen Merkmale erreicht.

Zum Setzen des erfindungsgemäßen Verbundankers wird im Bauteil ein Bohrloch erstellt und der Verbundmörtel entweder über eine Patrone oder über eine Kartusche in das Bohrloch eingebracht. Danach wird die Ankerstange mittels eines Bohr- oder Handhammers in das Bohrloch eingetrieben. Bei Verwendung einer Mehrkammerpatrone werden beim Setzen der Ankerstange die Komponenten des Verbundmörtels vermischt und damit der Aushärtvorgang ausgelöst. Beim Einbringen des Verbundmörtels über eine Kartusche erfolgt die Vermischung der Komponenten bereits beim Einbringen des Mörtels über einen an der Kartusche aufgesetzten Statikmischer. Der an der Ankerstange angeordnete Spreizbereich ermöglicht zusätzlich eine mechanische Verankerung der Ankerstange im Bohrloch. Nach dem Setzen der Ankerstange wird zur Befestigung eines Gegenstandes an dem Bauteil auf das den Gegenstand überragende Anschlussgewinde der Ankerstange eine Mutter aufgeschraubt, wobei sich die Ankerstange axial in Richtung Bohrlochmündung bewegt. Dabei wird der Spreizkonus in die im Bohrloch nach dem Setzen der Ankerstange festsitzende Spreizhülse eingezogen und über die Konusfläche die Spreizhülse im Bohrloch verspreizt. Die mechanische Verankerung ermöglicht somit sofort nach dem Setzen der Ankerstange die Montage und Befestigung des Gegenstandes am Bauteil. Nach dem Aushärten des Mörtels wird dann der Haltewert des Verbundankers soweit gesteigert, dass die Zusatzbelastungen durch Nutzung des befestigten Gegenstandes und ggf. auch auftretende Überlastungen aufgenommen werden können.

Zweckmäßigerweise ist die Spreizhülse auf einem abgesetzten zylindrischen Abschnitt der Ankerstange angeordnet und weist an ihrer Außenfläche Sperrelemente auf. Der Außendurchmesser des Spreizbereichs entspricht annähernd dem Bohrlochdurchmesser, so dass die die Außenfläche der Spreizhülse überragenden Sperrelemente nach dem Eintreiben der Ankerstange sich an der Bohrlochwandung verhaken. Beim Befestigen des Gegenstandes durch Aufschrauben einer Mutter auf das Anschlussgewinde der Ankerstange wird diese axial in Richtung Bohrlochmündung bewegt, so dass der Spreizkonus in die unverrückbar im Bohrloch gehaltene Spreizhülse eingezogen wird und dabei die Spreizhülse aufspreizt. Die mechanische Verankerung der Spreizhülse erfolgt unmittelbar nach dem Einbringen der Ankerstange in das Bohrloch, solange die Verbundmasse noch nicht ausgehärtet ist.

Zur Erzielung hoher Haltewerte nach dem Aushärten des Verbundmörtels ist es vorteilhaft, den Verankerungsbereich der Ankerstange durch mehrere in Richtung zum vorderen Ende sich erweiternde Konusabschnitte zu bilden. Sowohl der Spreizkonus des Spreizbereichs als auch die Konusabschnitte des Verankerungsbereichs ermöglichen bei einer Bohrlocherweiterung durch Rissbildung eine axiale Verschiebung der Ankerstange in der ausgehärteten Mörtelschale bzw. in der aufgeweiteten Spreizhülse, so dass ein Nachspreizeffekt entsteht. Bei der Verschiebung rutschen die Konusabschnitte in den engeren Bereich der Mörtelschale nach, so dass erneut eine formschlüssige Verspannung zwischen Ankerstange und Mörtelschale eintritt. Zur Verschiebung der Ankerstange gegenüber der Mörtelschale ist es erforderlich, dass sich die Mantelfläche der Ankerstange vollständig von der Mörtelschale ablöst, während der Verbund zwischen der Mörtelschale und der Bohrlochwandung erhalten bleibt. Ein optimales, die Ablösung der Ankerstange sicherstellendes Verhältnis der Verbundfläche zur Konusfläche ergibt sich bei einem Wert zwischen 3 und 4,5 und einem Verhältnis der Bohrlochringspaltfläche zum Bolzenquerschnitt zwischen 0,3 und 0,5. Desweiteren hat es sich für die Nachspreizung als zweckmäßig erwiesen, wenn der Konuswinkel der Konusabschnitte zwischen 12° bis 20° beträgt.

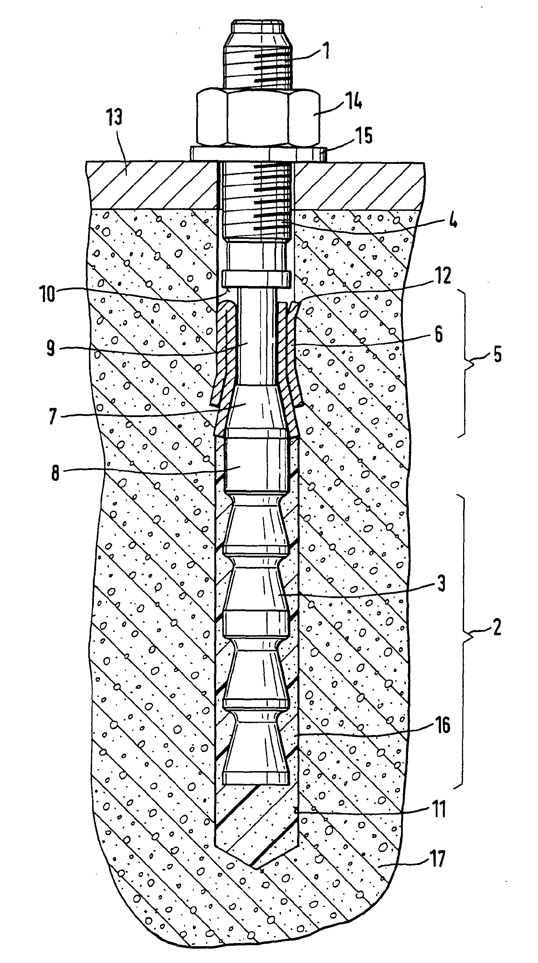

Die Erfindung wird nachfolgend anhand der Zeichnung näher erläutert.

Der in der Zeichnung dargestellte Verbundanker besteht aus einer Ankerstange 1, die mehrere den Verankerungsteil 2 bildende Konusabschnitte 3 aufweist. Der Konuswinkel der Konusabschnitte 3 liegt vorzugsweise zwischen 12° und 20°, was innerhalb der ausgehärteten Mörtelschale einen optimalen Nachspreizeffekt ermöglicht. Zwischen dem Verankerungsteil 2 und dem Anschlussgewinde 4 weist die Ankerstange 1 einen Spreizbereich 5 auf, der durch eine Spreizhülse 6 und einen in die Spreizhülse 6 einziehbaren Spreizkonus 7 gebildet ist. An den Spreizkonus 7 schließt sich ein zylindrischer Abschnitt 8 an, dessen Außendurchmesser den größten Durchmesser des Spreizkonuses 7 entspricht. Die Spreizhülse 6 ist auf einem abgesetzten zylindrischen Abschnitt 9 der Ankerstange 1 angeordnet, an den sich unmittelbar der Spreizkonus 7 anschließt. Durch den abgesetzten Abschnitt 9 entsteht eine Anschlagfläche 10 an der Ankerstange 1, an der sich die Spreizhülse 6 beim Eintreiben der Ankerstange 1 in das Bohrloch 11 abstützt. Zum Festsetzen der Spreizhülse 6 im Bohrloch nach dem Setzen der Ankerstange 1 sind an der Außenfläche der Spreizhülse 6 Sperrelemente 12 angeordnet.

Zur Verankerung der Ankerstange 1 in einem Bauteil 17 wird zunächst ein Bohrloch erstellt, dessen Durchmesser etwas größer ist als der Außendurchmesser der Ankerstange. Für eine Ankerstange M 12 empfiehlt sich ein Bohrlochdurchmesser von 14mm. Nach dem Einbringen des Verbundmörtels über eine Glaspatrone oder einer Kartusche wird die Ankerstange 1 mit einem Bohr- oder einem Handhammer durch den zu befestigenden Gegenstand 13 in das Bohrloch 11 soweit eingetrieben, bis die auf dem Anschlussgewinde 4 aufgeschraubte Mutter 14 mit der Unterlagscheibe 15 auf den zu befestigenden Gegenstand 13 aufsitzt. Mit der Mutter 14 wird die Ankerstange 1 axial in Richtung Bohrlochmündung bewegt, so dass der Spreizkonus 7 in die durch die Sperrmittel 12 unverrückbar im Bohrloch festsitzende Spreizhülse 6 eindringt und diese aufspreizt. Gleichzeitig wird der zu befestigende Gegenstand 13 gegen das Bauteil 12 verspannt. Die mechanische Verankerung der Ankerstange 1 muss unmittelbar nach dem Setzen der Ankerstange erfolgen, solange der Verbundmörtel noch nicht ausgehärtet ist.

Der Verbundmörtel besteht aus einer Harzkomponente, die auf ungesättigten Polyesterharzen und/oder Vinylurethanharzen und/oder Epoxydharzen und/oder Polyurethanharzen und/oder Vinylesterharzen und/oder mineralischen Bindemitteln basiert und deren Härterkomponente ein organisches Peroxyd ist.

Nach dem Aushärten des Verbundmörtels sind die den Verankerungsteil 2 bildenden Konusabschnitte 3 formschlüssig in der ausgehärteten Mörtelschale 16 eingebunden. Tritt durch Rissbildung eine Bohrlocherweiterung ein, löst sich die Mörtelschale von den Konusflächen ab und ermöglicht damit eine axiale Verschiebung der Ankerstange 1. Bei der Verschiebung rutschen die Konusabschnitte 3 in den engeren Bereich der Mörtelschale 16 nach, so dass erneut eine formschlüssige Verspannung zwischen Ankerstange 1 und Mörtelschale 16 eintritt. Auch der Spreizbereich 5 ermöglicht durch weiteres Eindringen des Spreizkonuses 7 in die Spreizhülse 6 die für das Nachspreizen notwendige axiale Verschiebung der Ankerstange 1.

## Patentansprüche

1. Verbundanker mit Ankerstange, die an ihrem hinteren Ende ein Anschlussgewinde zur Befestigung eines Gegenstandes an einem Bauteil und an ihrem vorderen Ende einen mittels einer Verbundmasse in einem Bohrloch des Bauteils verankerbaren Verankerungsteil aufweist, **dadurch gekennzeichnet, dass** die Ankerstange (1) einen zwischen Anschlussgewinde (4) und Verankerungsteil (2) angeordneten Spreizbereich (5) aufweist, der durch eine Spreizhülse (6) und einem mit der Ankerstange (1) in die Spreizhülse (6) zu deren Aufspreizung einziehbaren Spreizkonus (7) gebildet ist.

2. Verbundanker nach Anspruch 1, **dadurch gekennzeichnet, dass** die Spreizhülse (6) auf einem abgesetzten zylindrischen Abschnitt (9) der Ankerstange (1) angeordnet ist und an ihrer Außenfläche Sperrelemente (12) aufweist.

3. Verbundanker nach Anspruch 1, **dadurch gekennzeichnet, dass** sich an den Spreizkonus (7) ein zylindrischer Abschnitt (8) anschließt, dessen Außendurchmesser dem größten Durchmesser des Spreizkonuses (7) entspricht.

4. Verbundanker nach Anspruch 1, **dadurch gekennzeichnet, dass** der Verankerungsbereich (2) der Ankerstange (1) durch mehrere in Richtung zum vorderen Ende sich erweiternde Konusabschnitte (3) gebildet ist, deren Konuswinkel zwischen 12° bis 20° beträgt.
